# EUROPEAN PATENT SPECIFICATION

(11) **EP 4 173 687 B1**
(45) Date of publication and mention of the grant of the patent: **01.05.2024**
(21) Application number: 21205281.5
(22) Date of filing: 28.10.2021
(51) Int. Cl.: B01D 21/04, B01D 21/18, B01D 21/24

(54) **SHEARING DEVICE, ARRANGEMENT AND USE**
SCHERVORRICHTUNG, ANORDNUNG UND VERWENDUNG
DISPOSITIF, AGENCEMENT ET UTILISATION DE CISAILLAGE

(43) Date of publication of application: 03.05.2023
(73) Proprietor: Metso Finland Oy, 02230 Espoo (FI)
(72) Inventor: Viduka, Stephen, Perth 6008 (AU)
(74) Representative: Papula Oy

(56) References cited:
- SU-A1- 623 834
- US-A1- 2011 180 484
- US-A1- 2011 198 303

## Description

### BACKGROUND

The invention relates to a shearing device connectable to a drive assembly of an arrangement for separating solids from liquid.

The invention further relates to an arrangement for solid - liquid separation.

The invention still further relates to a use of the shearing device or the arrangement for separating solids from suspensions in the mining and mineral processing industries.

Although known arrangements for separating solids from liquid, such as thickeners, clarifiers and concentrators, used for separating solids from suspensions are result of vigorous research and development work, there are still needs for even more effective shearing devices and arrangements in the field of mining and mineral processing industries. Examples of such arrangements can be found in US 2011/198303 and US 2011/180484.

### BRIEF DESCRIPTION

Viewed from a first aspect, there can be provided a shearing device connectable to a drive assembly of an arrangement for separating solids from liquid, the shearing device comprising
- attachment arrangement arranged in a first end of the device for connecting the shearing device to the drive assembly,
- a shearing arrangement being arranged to define shearing elements angled with the lengthwise direction of the device and intervals therebetween, wherein
- the device has a proximal portion closer to the first end and a distal portion closer to a second end of the device opposite to the first end, and
- average width of the shearing elements arranged in the distal portion is greater than average width of the shearing elements arranged in the proximal portion.

Thereby a uniform shear rate to the aggregates of pulp may be created and thus a more effective shearing device may be achieved. The inventors have discovered unexpectedly and surprisingly that too high shear rates close to surfaces of the shearing elements broke aggregates, which delays dewatering of the suspension, and that said too high shear rates may be avoided by the claimed structure of the shearing device.

Viewed from a further aspect, there can be provided an arrangement for solid - liquid separation, the arrangement comprising:
- a tank for receiving a feed material, and
- at least one shearing device as described in this disclosure, connected by the attachment arrangement to a drive assembly for rotating thereby about an axis of rotation.

Thereby a more effective arrangement for solid - liquid separation may be achieved.

Viewed from a still further aspect, there can be provided use of the shearing device and/or the arrangement described in this disclosure for separating solids from suspensions in the mining and mineral processing industries.

Thereby a more effective process of separating solids from suspensions may be achieved.

The device, arrangement and use are characterised by what is stated in the independent claims. Some other embodiments are characterised by what is stated in the other claims. Inventive embodiments are also disclosed in the specification and drawings of this patent application. The inventive content of the patent application may also be defined in other ways than defined in the following claims. The inventive content may also be formed of several separate inventions, especially if the invention is examined in the light of expressed or implicit sub-tasks or in view of obtained benefits or benefit groups. Some of the definitions contained in the following claims may then be unnecessary in view of the separate inventive ideas. Features of the different embodiments of the invention may, within the scope of the basic inventive idea, be applied to other embodiments.

In one embodiment, the shearing elements progressively increase in width from the first end towards the second end.

An advantage is that even more uniform shear rate to the aggregates of suspension may be achieved.

In one embodiment, the shearing elements increase their width in groups so that some adjacent shearing elements has a same width.

An advantage is that the manufacturing of the shearing device is simple and inexpensive.

In one embodiment, the shearing arrangement comprises plurality of shearing elements being spaced apart along the device to define respective intervals therebetween.

An advantage is that the structure is simple and light.

In one embodiment, the shearing element has a linear shape.

An advantage is that the structure is simple and light.

In one embodiment, the shearing element is a roundish or round picket or rod.

An advantage is that probability of unwanted high shear rates caused by the shearing element can be limited.

In one embodiment, the intervals between the shearing elements are varying so that two or more shearing elements are spaced at uneven intervals with respect to each other.

An advantage is that more even shear of the suspension may be achieved.

In one embodiment, the intervals progressively increase from the first end to the second end of the arm.

An advantage is that the disturbance of the suspension caused by the shearing elements may be optimized.

In one embodiment, the shearing device comprises an arm arranged in the lengthwise direction of the shearing device, and at least some of the shearing elements extends on both sides of the arm.

An advantage is that torsional forces of the arm caused by the suspension to the shearing elements may be reduced or minimized.

In one embodiment, the shearing device comprises an arm arranged in the lengthwise direction of the shearing device, and at least some of the shearing elements extends only on one side of the arm.

An advantage is that all the length of the at least some of the shearing elements may be utilized in shearing, and that the arm can be arranged above the region to be sheared, and thus the torque requirement of the drive assembly may be decreased.

In one embodiment, the proximal portion of the arm has a portion in the vicinity of the attachment arrangement being devoid of the shearing elements.

An advantage is that rotation of the pulp bed, also known as "donutting", may be avoided, and thus a decrease in the density of the thickened pulp caused by the donutting may also be avoided or at least limited.

In one embodiment, the shearing device comprises an auxiliary element in at least one of the intervals.

An advantage is that an enhanced guiding of flow in respect of the shearing elements may be achieved.

In one embodiment, the arrangement comprises a rake assembly arranged below the shearing devices and comprising at least one rake arm having scraper blades extending downwardly towards the bottom of the tank to move settled and compacted pulp towards an underflow outlet.

An advantage is that the performance of the arrangement may be increased.

### BRIEF DESCRIPTION OF FIGURES

Some embodiments illustrating the present disclosure are described in more detail in the attached drawings, in which
Figure 1 illustrates a zone formation of material having different overall densities in an arrangement for separating pulp from a feed material,
Figure 2 is a schematic side view of an arrangement for separating solids from a feed material in partial cross-section,
Figure 3 is a schematic top view of the arrangement shown in Figure 2,
Figure 4a is a schematic side view of a shearing device,
Figure 4b is a schematic side view of a detail of the shearing device shown in Figure 4a,
Figure 5 is a schematic side view of another shearing device,
Figure 6 is a schematic side view of a third shearing device,
Figure 7 is a schematic view of a shearing device shown from the second end thereof,
Figure 8 is a schematic view of a detail of a shearing device,
Figure 9 is a schematic side view of a fourth shearing device,
Figure 10a illustrates a shear rate profile of a known shearing device, and
Figure 10b illustrates a shear rate profile of a shearing device according to an embodiment of the invention.

In the figures, some embodiments are shown simplified for the sake of clarity. Similar parts are marked with the same reference numbers in the figures.

### DETAILED DESCRIPTION

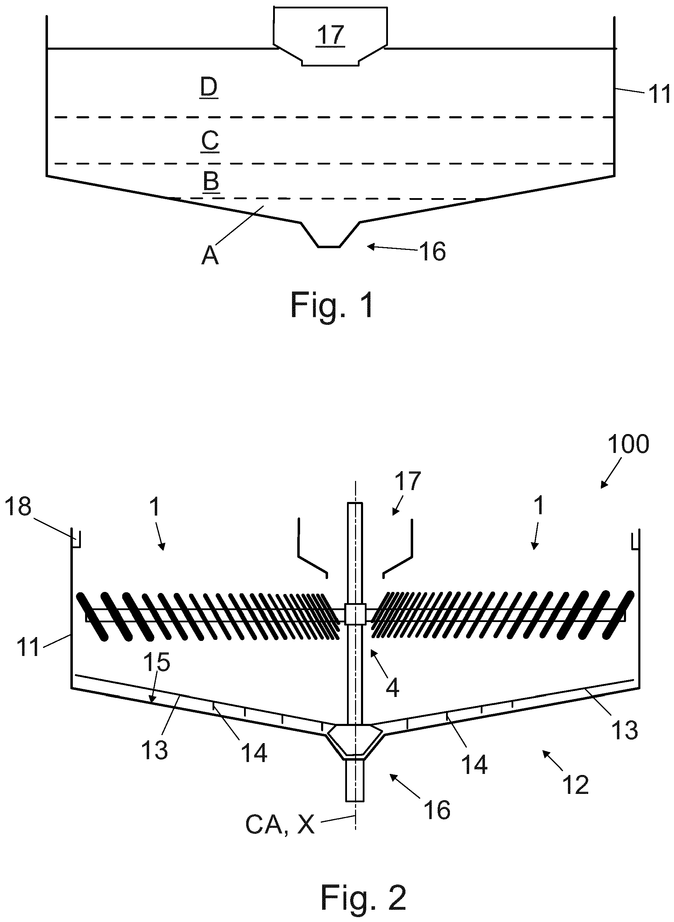

**Figure 1** illustrates a zone formation of material having different overall densities in an arrangement for separating pulp from a feed material.

Separation devices, such as thickeners, clarifiers and concentrators, are typically used for separating solids from suspensions in the mining and mineral processing industries. These devices typically comprise a tank 11 in which solids are deposited from a suspension or solution and settle toward the bottom as pulp or sludge to be drawn off from an underflow outlet 16 and recovered. A dilute liquor of lower relative density is thereby displaced toward the top of the tank, for removal via an overflow launder. The suspension to be thickened is initially fed through a feed pipe, conduit or line into a feedwell 17 disposed within the tank. A rake assembly (shown in Figure 2) is mounted for rotation about a central drive shaft and typically has at least two rake arms having scraper blades to move the settled material inwardly for collection through the underflow outlet.

In its application to mineral processing, separation and extraction, a finely ground ore is suspended as solids in a suitable liquid medium such as water at a consistency which permits flow, and settlement in quiescent conditions. The solids is settled from the suspension by a combination of gravity with or without chemical and/or mechanical processes. Initially, coagulant and/or flocculant can be added into the suspension to improve the settling process. The suspension is then carefully mixed into the separation device, such as a thickener, to facilitate the clumping together of solid particles, eventually forming larger denser "aggregates" of solids that are settled out of suspension. Liquid, also known as liquor, is typically trapped with the solid particles within the solids aggregates.

Typically, several zones or layers of material having different overall densities gradually form within the tank 11, as illustrated in Figure 1. At the bottom of the tank 11, the pulp forms a relatively dense zone A of compacted pulp or solids that are frequently in the form of networked aggregates (i.e. the solids aggregates are in continuous contact with one another). This zone A is typically called a "pulp bed" or a networked layer of pulp. Above the pulp bed A, a hindered zone B tends to contain solids that have not yet fully settled or "compacted". That is, the solids or aggregates are not yet in continuous contact with one another (un-networked). Above the hindered zone B is a "free settling" zone C, where solids or aggregates are partially suspended in the liquid and descending toward the bottom of the tank 11. It will be appreciated that the hindered zone B is not always a distinct zone between the networked layer A and the free settling zone C. Instead, the hindered zone B may form a transition or an interface between the networked layer A and the free settling zone C that blends between the two zones. Above the free settling zone C is a clarified zone D of dilute liquor, where little solids are present and the dilute liquor is removed from the tank 11 by way of an overflow launder (shown in Figure 2). The underflow outlet 16 removes the compacted pulp from the tank 11.

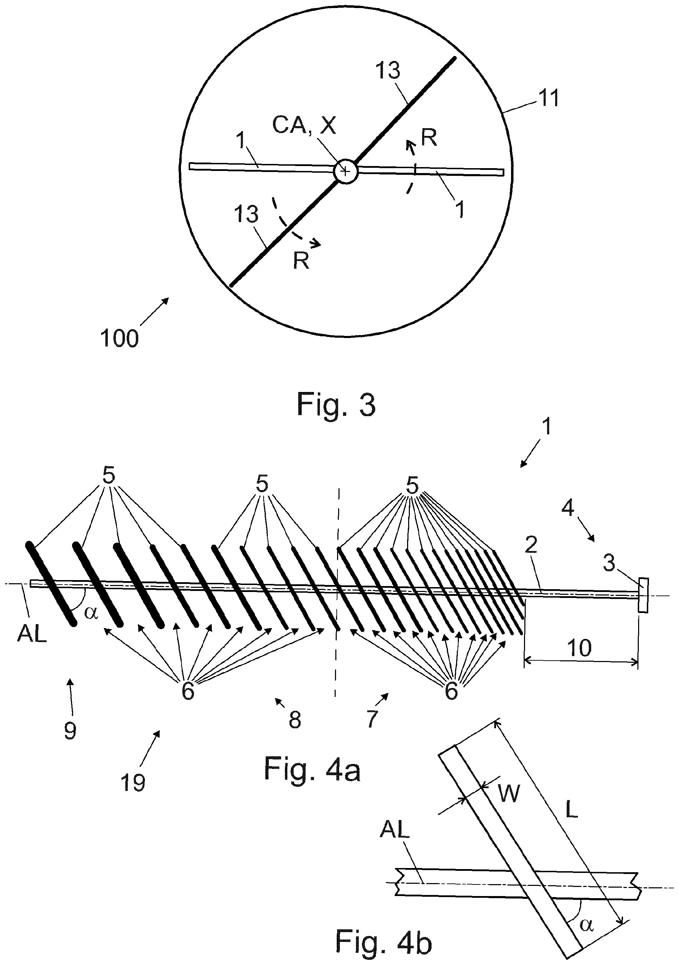

**Figure 2** is a schematic side view of an arrangement for separating solids from a feed material in partial cross-section, and **Figure 3** is a schematic top view of the arrangement shown in Figure 2.

The arrangement 100 comprises a tank 11 for receiving a feed material that is fed from e.g. a feedwell 17. The tank 11 has basically a cylindrical form with a conical bottom 15 and it has a vertical central axis CA. The diameter of the tank 11 may be tens of meters, such as about 20 m, such as 18 m.

The feed material settles in the tank 11 and a solids forms into aggregates, the aggregates settling towards the bottom 15 of the tank and forms a networked layer of solids.

At least one shearing device 1 is provided in the tank 11. In one embodiment, the shearing device 1 is arranged to cause a disturbance substantially uniformly across an upper region of the networked layer A, so as to disrupt the networked solids within a predetermined period of time. Thereby entrained liquid is released from the networked solids and the relative density of the solids increased below the disturbance zone.

Typically, the arrangement 100 comprises at least two shearing devices 1, such as 2 to 12, or 2 to 10, or 2 to 6 shearing devices. The number of the shearing devices may be even or odd. For instance, the embodiment shown in Figures 2 and 3 comprises two shearing devices 1. In one embodiment, the shearing devices 1 are identical with each other. In another embodiment, there are shearing devices 1 of at least two different configurations in the arrangement 100. In one embodiment, the arrangement 100 comprises just one shearing device 1 described in this disclosure.

The shearing device 1 may comprise an arm and a shearing arrangement arranged to the arm. The shearing arrangement is arranged to define shearing elements angled with the arm and intervals between the shearing elements (shown in the following Figures). In one embodiment, the arm is arranged horizontally, such as shown in Figure 2. Alternatively, the arm may be arranged in an angle deviating from the horizontal plane.

An attachment arrangement 3 is arranged in a first end 4 of the shearing device 1 for connecting to a drive assembly that is arranged for rotating the shearing device 1 about an axis of rotation X. In one embodiment, such as shown in Figure 2, the axis of rotation X is concentric to the central axis CA. Alternatively, the axis of rotation of the shearing device is parallel, eccentric, or offset with respect to a central axis of the tank.

In one embodiment, the arrangement 100 comprises a rake assembly 12 that includes at least one rake arm 13. The rake arm 13 has scraper blades 14 that extend downwardly towards the bottom 15 of the tank to move settled and compacted pulp towards the underflow outlet 16. Typically, the arrangement 100 comprises at least two rake arms 13. For instance, the embodiment shown in Figures 2 and 3 comprises two rake arms 13. Typically, the rake assembly 12 may be rotated at a different speed to the shearing device 1. In one embodiment, such as shown in Figure 3, the rake assembly 12 is arranged to rotate R in the same direction as the shearing device 1. In another embodiment, the rake assembly 12 is arranged to rotate in opposite direction as the shearing device 1.

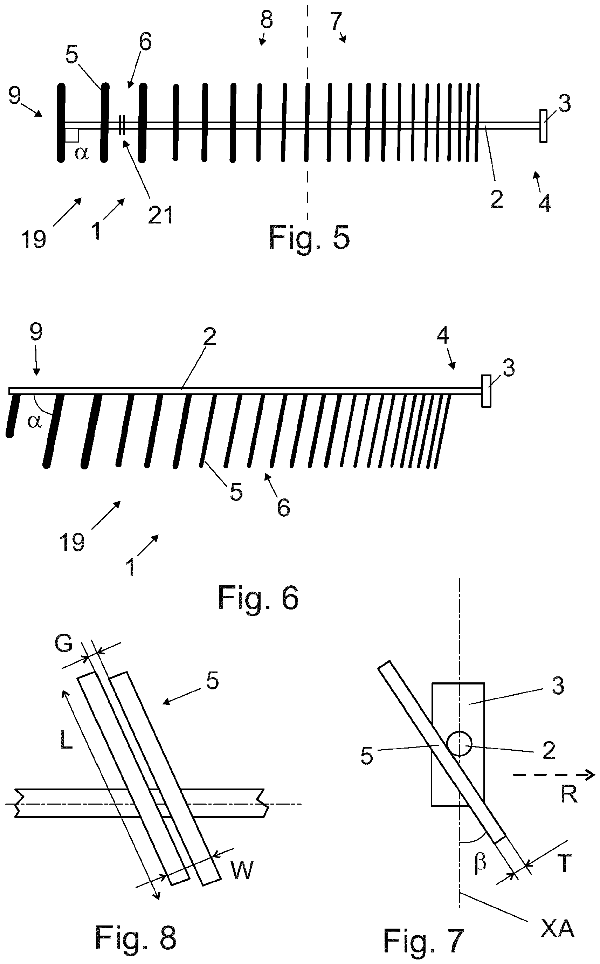

**Figure 4a** is a schematic side view of a shearing device, **Figure 4b** is a schematic side view of a detail of the shearing device shown in Figure 4a, **Figure 5** is a schematic side view of another shearing device, **Figure 6** is a schematic side view of a third shearing device, **Figure 7** is a schematic view of a shearing device shown from the second end thereof, and **Figure 8** is a schematic view of a detail of a shearing device.

In one embodiment, the shearing device 1 comprises an arm 2, an attachment arrangement 3 arranged in a first end 4 of the arm for connecting the shearing device 1 to the drive assembly, and a shearing arrangement 19. In one embodiment, the shearing arrangement 19 comprises plurality of shearing elements 5 arranged to and angled with the arm 2. The shearing elements are spaced apart along the arm 2 so that there are respective intervals 6 therebetween. The arm and the shearing arrangement are typically manufactured from a metal or alloy.

In one embodiment, the shearing element 5 is an object having length L, width W, and thickness T. The length L of the shearing element 5 extends at an angle of inclination α with respect to the arm 2. The thickness T (shown in Figure 7) is the dimension of the shearing element perpendicular to the lengthwise direction AL of the device. The width W is the dimension of the shearing element perpendicular to the length L and the thickness T. In one embodiment, the width W is selected in range of 10 mm to 300 mm.

The shearing device 1 has a proximal portion 7 closer to the first end 4 and a distal portion 8 that lies closer to a second end 9 of the device, i.e. the end opposite to the first end 4. The average width of the shearing elements 5 arranged in the distal portion 8 is greater than average width of the shearing elements 5 arranged in the proximal portion 7. In other words, the shearing elements 5 arranged in the distal portion 8 are generally wider than the shearing elements 5 arranged in the proximal portion 7.

In one embodiment, the proximal section 7 comprises an equal number of shearing elements 5 with the distal portion 8.

In one embodiment, the length of the proximal section 7 is 50 % of the distance between the shearing element closest to the first end 4 and the shearing element closest to the second end 9.

In one embodiment, the shearing elements 5 progressively increase in width W from the first end 4 towards the second end 9. The progressive increase may follow a linear, a non-linear or a combination of linear and non-linear formula.

In one embodiment, such as shown in Figure 4a, the shearing elements 5 increase their width W in groups. This means that there are some adjacent shearing elements having a same first width, making a first group, and next to the first group there is a second group consisting of shearing elements that has a second width, and said second width differs from the first width.

In one embodiment, such as shown in Figures, the shearing element 5 has a linear shape. For instance, the shearing element 5 may be a roundish or round picket or rod. In one embodiment, at least substantially all, or even all, the shearing elements 5 have a linear shape. Alternatively, one or more shearing elements 5 have a non-linear configuration. For example, the shearing element(s) may be helical, spiral or curved, in whole or part. Also configurations of V-shaped angled rods, half or semi-circular tubes or other shearing elements having different polygonal cross-sections are possible. The cross-section may be constant, or it may have alterations along its length.

In one embodiment, majority of the shearing elements 7 has an equal length. For instance, in Figure 4a all but two shearing elements 7 closest to the first end 4 of the arm have an equal length.

In one embodiment, all the shearing elements 7 has an equal length.

In one embodiment, the shearing elements 7 progressively decrease in length from the first end 4 to the second end 9.

In one embodiment, the shearing elements 7 progressively increase in length from the first end 4 to the second end 9.

In some embodiments, lengths of the shearing elements 7 vary so that the longest or the shortest shearing elements are those situated in a middle part of the device.

The intervals or spacings 6 between the shearing elements 5 may be constant, i.e. the shearing elements are spaced at even intervals, or varying. In one embodiment, the intervals 6 between the shearing elements 5 are varying so that two or more shearing elements are spaced at uneven intervals with respect to each other. In one embodiment, the intervals 6 progressively increase from the first end 4 to the second end 9.

In one embodiment, the shearing element 5 is fixed to the arm by welding. In one embodiment, the shearing element 5 is fixed by fixation means, such as one or more bolts, to the arm.

In one embodiment, such as shown in Figures, the arm 2 is linear. This kind of structure is simple and basically as light as possible. However, in some other embodiments, the arm may have a curved or otherwise non-linear shape.

In one embodiment, the cross-section of the arm 2 is roundish, such as round, oval, or ovoid. An advantage is that probability of unwanted high shear rates caused by the arm can be limited.

In one embodiment, the cross-section of the arm 2 is polygon, such as quadrangular, pentagonal, hexagonal, etc.

The arm 2 may have constant cross-sectional dimensions, or alternatively, the arm may have varying cross-sectional dimensions. In one embodiment, the cross-sectional dimensions are decreasing from the first end 4 to the second end 9.

As discussed earlier in this disclosure, the shearing element 5 has the angle of inclination α with respect to the lengthwise direction AL of the device. In one embodiment, the angle of inclination α is selected in range of 20° - 160°. In one embodiment, said angle is at least substantially 90°. Figure 5 is showing an embodiment where the angle is 90°. In one embodiment, the angle of inclination α is selected in range of 30° - 150°, such as 45°. An advantage is that relatively longer shearing element are enabled to be used, and thus the effect of the substantially uniform cumulative shear to the pulp may be enhanced. In one embodiment, the angle of inclination α of all the shearing elements 5 of the shearing arrangement 19 is at least substantially same. In another embodiment, there are variations in said angle.

However, the shearing elements 5 may also be inclined at an angle of incidence β with respect to a first direction XA of the attachment arrangement 3, as shown in Figure 7. As the shearing device 1 is fixed in the arrangement, said first direction XA is positioned parallel to or coplanar with the axis of rotation X of arrangement.

In one embodiment, the angle of incidence β is selected in range of -70° to +70°. Positive value of the angle β means that the lower end of the shearing element 5 travels ahead of the upper end of said shearing element when moving in the direction R of rotation. In one embodiment, the angle of incidence β is selected in range of -45° to 45°. In one embodiment, the angle β is 0°. In one embodiment, the angle of incidence β is selected in range of -30° to +30°. In one embodiment, the angle of incidence β is selected in range of -20° to +20°.In one embodiment, all the shearing elements 5 arranged in the shearing device 1 have at least substantially same angle of incidence. In another embodiment, there are substantial variations in the angle of incidence between the shearing elements 5 arranged in the shearing device 1. In one embodiment, the angle of incidence β vary so that the shearing elements 5 follows a propeller blade -like plane.

An advantage of those embodiments wherein the angle of incidence β is more than zero is that longer shearing elements are enabled to be used in the arrangement 100, and thus the effect of the substantially uniform cumulative shear to the pulp exiting the region may be enhanced.

In one embodiment, at least some of the shearing elements 5 extends on both sides of the arm 2. In one embodiment, such as shown in Figures 4a and 5, all or at least substantially all shearing elements 5 extends on both sides of the arm 2.

In one embodiment, at least some of the shearing elements 5 extends only on one side of the arm 2. For instance, in the embodiment shown in Figure 6, all the shearing elements 5 are completely on one side of the arm 2, and thus the other side is devoid of shearing elements. In another embodiment, there are shearing elements 5 in the shearing device 1 that extends only on one side of the arm 2, but at least one of said shearing elements is extending on a first side of the arm and another of said shearing elements is extending on a second side of the arm. This kind of shearing element (s) arranged on the first side of the arm may have same dimensions, profile, shape, intervals, angle of inclination and/or angle of incidence as the shearing element(s) arranged on the second side of the arm, but not necessarily.

In some embodiments where the angle of inclination α deviates from 90°, such as 30° - 50°, the length of the shearing elements 5 close to the first end 4 are selected to end on a same or at least substantially same plane normal to the lengthwise direction L of the arm.

In one embodiment, there is a portion 10 (shown in Figure 4a) in the vicinity of the attachment arrangement 3 that is devoid of the shearing elements 5. In another embodiment, said portion 10 is provided with substantially smaller shearing elements and/or arranged more sparse compared to shearing elements 5 outside of said portion 10.

The attachment arrangement 3 arranged in the first end 4 of the device may comprise e.g. an attachment flange or plate that is constructed for transmitting driving force rotating the shearing device 1 from a drive assembly (not shown). In another embodiment, the attachment arrangement 3 comprises or consists of one or more surfaces of the device 1 or the arm 2 for welding the shearing device to the drive assembly. In this embodiment, the attachment flange or plate is not necessary.

In one embodiment, the device comprises at least one auxiliary element 21 in at least one interval 6. For instance, the embodiment shown in Figure 5 comprises two auxiliary elements 21 in a second interval from the second end 9. Dimensions and shape of the auxiliary elements 21 are selected so that they do not interfere the uniform shear rate created by the shearing elements 5. In one embodiment, the length of the auxiliary element 21 is not more than 50 %, preferably not more than 10 % of the length of an adjacent shearing element.

**Figure 8** is a schematic view of a detail of a shearing device. In one embodiment, the shearing element 5 has a continuous solid outer surface without holes or slits, such as shown in Figures 4b and 7. In another embodiment, the outer surface of the shearing element 5 has at least one hole or slit. In one embodiment, such as shown in Figure 8, the slit having width G divides the shearing element in two lengthwise parts.

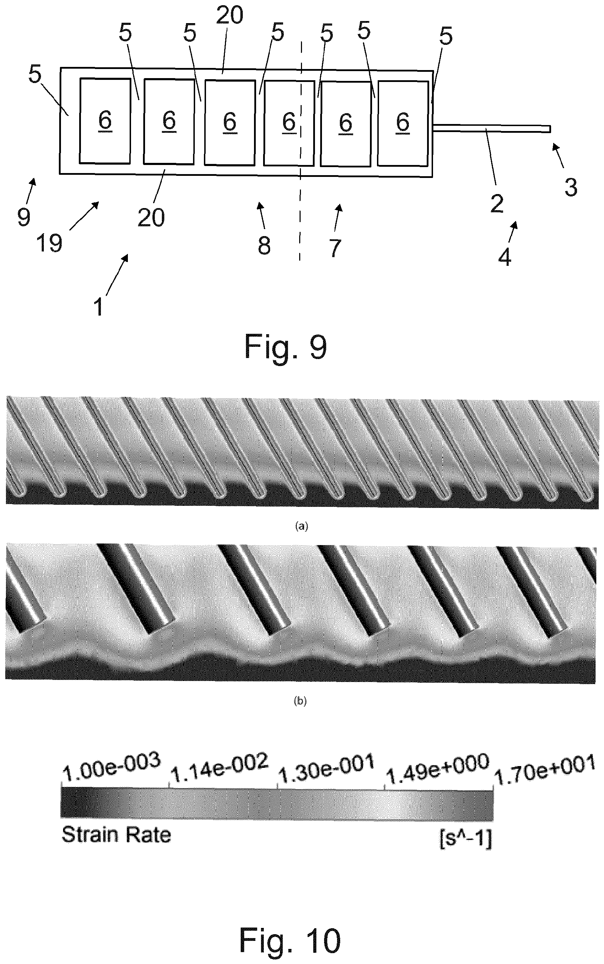

Figure 9 is a schematic side view of a fourth shearing device. In one embodiment, at least some of the shearing elements 5 are connected to each other by at least one connecting element 20. In the embodiment shown in Figure 8, there are two connecting elements 20 that extend between all the shearing elements 5 of the shearing arrangement 19. The intervals 6 between the shearing elements have closed ends so that openings having rectangular shape have been formed. The shape of the intervals may vary depending on the angle of inclination of the shearing elements, positioning of the connecting element(s), etc. Additionally, the number of the connecting elements 20 may be less than two, or more than two. This kind of shearing arrangement 19 may be manufactured e.g. from a plate material into which the intervals are cut, or put together from separately shaped pieces, etc.

In one embodiment, the structure of the shearing arrangement 19 is strong enough for carrying loads and stresses caused in the separation process. Thus, the arm 2 may be shorter, even substantially shorter than the total length of the shearing device 1. In one embodiment, such as shown in Figure 9, the arm 2 extends just to the shearing element 5 closest to the first end 4 of the arm.

In one embodiment, the shearing arrangement 19 is connected directly to the drive assembly (not shown), and the shearing device 1 may be constructed without the arm.

**Figure 10a** illustrates a shear rate profile of a known shearing device, and **Figure 10b** illustrates a shear rate profile of a shearing device according to an embodiment of the invention. The shear rate profiles are derived from CFD (Computational Fluid Dynamics) analyses.

As it can be seen in Figure 10a showing the known shearing device, the shearing elements are generating very high shear rate close to surfaces thereof. This is undesirable phenomena since high shear rates broke aggregates and dewatering will be prevented or at least delayed.

In Figure 10b showing the shearing device according to an embodiment of the invention, it can be readily seen that shear rates close to the shearing elements are essentially lower than those shown in Figure 10a. Thus, aggregates are not broken, and dewatering is promoted.

The invention is not limited solely to the embodiments described above, but instead many variations are possible within the scope of the inventive concept defined by the claims below.

The drawings and the related description are only intended to illustrate the idea of the invention. The invention may vary in detail within the scope of the inventive idea defined in the following claims.

### REFERENCE SYMBOLS

- 1: shearing device
- 2: arm
- 3: attachment arrangement
- 4: first end
- 5: shearing element
- 6: interval
- 7: proximal portion
- 8: distal portion
- 9: second end
- 10: portion devoid of shearing elements
- 11: tank
- 12: rake assembly
- 13: rake arm
- 14: scraper blade
- 15: bottom
- 16: underflow outlet
- 17: feedwell
- 18: overflow launder
- 19: shearing arrangement
- 20: connecting element
- 21: auxiliary element

- 100: arrangement

- α: angle of inclination
- β: angle of incidence
- A: pulp bed
- B: hindered zone
- C: free settling zone
- D: clarified zone

- AL: lengthwise direction of the shearing device
- CA: central axis
- G: gap
- L: lengthwise direction
- R: direction of rotation
- T: thickness
- W: width
- X: axis of rotation
- XA: first direction

## Claims

1. A shearing device (1) connectable to a drive assembly of an arrangement for separating solids from liquid, the shearing device (1) comprising
- attachment arrangement (3) arranged in a first end (4) of the device for connecting the shearing device (1) to the drive assembly,
- a shearing arrangement (19) being arranged to define shearing elements (5) angled with the lengthwise direction (AL) of the device and intervals (6) therebetween, wherein
- the device (1) has a proximal portion (7) closer to the first end (4) and a distal portion (8) closer to a second end (9) of the device opposite to the first end (4), wherein
- the shearing element (5) has length (L), width (W), and thickness (T),
- the length of the shearing element (5) extends at an angle of inclination (α) with respect to the lengthwise direction (AL) of the device,
- the thickness (T) is the dimension of the shearing element perpendicular to the lengthwise direction (AL) of the device, and
- the width (W) is the dimension of the shearing element perpendicular to the length and the thickness, **characterized in that**
- average width of the shearing elements (5) arranged in the distal portion (8) is greater than average width of the shearing elements (5) arranged in the proximal portion (7).

2. The shearing device as claimed in claim 1, wherein
- the shearing elements (5) progressively increase in width from the first end (4) towards the second end (9).

3. The shearing device as claimed in claim 1, wherein
- the shearing elements (5) increase their width in groups so that some adjacent shearing elements has a same width.

4. The shearing device as claimed in any of the preceding claims, wherein the shearing arrangement (19) comprises
- plurality of shearing elements (5) being spaced apart along the lengthwise direction (AL) of the device to define respective intervals (6) therebetween.

5. The shearing device as claimed in any of the preceding claims, wherein
- the shearing element (5) has a linear shape.

6. The shearing device as claimed in any of the preceding claims, wherein
- the shearing element (5) is a roundish or round picket or rod.

7. The shearing device as claimed in any of the preceding claims, wherein
- the intervals (6) between the shearing elements (5) are varying so that two or more shearing elements are spaced at uneven intervals with respect to each other.

8. The shearing device as claimed in claim 7, wherein
- the intervals (6) progressively increase from the first end (4) to the second end (9).

9. The shearing device as claimed in any of the preceding claims, comprising an arm (2) arranged in the lengthwise direction (AL) of the shearing device, and wherein
- at least some of the shearing elements (5) arranged in the proximal portion (7) and the distal portion (8) extends on both sides of the arm (2).

10. The shearing device as claimed in any of the preceding claims, comprising an arm (2) arranged in the lengthwise direction (AL) of the shearing device, and wherein
- at least some of the shearing elements (5) arranged in the proximal portion (7) and the distal portion (8) extends only on one side of the arm (2).

11. The shearing device as claimed in any of the preceding claims, wherein
- the proximal portion (7) of the device has a portion (10) in the vicinity of the attachment arrangement (3) being devoid of the shearing elements (5).

12. The shearing device as claimed in any of the preceding claims, comprising
- an auxiliary element (21) in at least one of the intervals (6), wherein
- the length of the auxiliary element 21 is not more than 50 %, preferably not more than 10 % of the length of an adjacent shearing element.

13. An arrangement for solid - liquid separation, the arrangement (100) comprising:
- a tank (12) for receiving a feed material, and
- at least one shearing device (1) as claimed in any of the preceding claims, connected by the attachment arrangement (3) to a drive assembly for rotating thereby about an axis of rotation (X).

14. The arrangement as claimed in claim 13, comprising
- a rake assembly (12) comprising at least one rake arm (13) having scraper blades (14) extending downwardly towards the bottom (15) of the tank to move settled and compacted pulp towards an underflow outlet (16).

15. Use of the shearing device as claimed in any of claims 1 - 12 or the arrangement claimed in any of claims 14 - 15 for separating solids from suspensions in the mining and mineral processing industries.

## Patentansprüche

1. Schervorrichtung (1), die mit einer Antriebseinheit einer Anordnung zum Trennen von Feststoffen und Flüssigkeiten verbindbar ist, aufweisend
- eine an einem ersten Ende (4) der Vorrichtung angeordnete Befestigungsanordnung (3) zum Verbinden der Schervorrichtung (1) mit der Antriebseinheit,
- eine Scheranordnung (19), die so angeordnet ist, dass sie zur Längsrichtung (AL) der Vorrichtung abgewinkelte Scherelemente (5) und Abstände (6) dazwischen definiert, wobei
- die Vorrichtung (1) einen proximalen Abschnitt (7) näher am ersten Ende (4) und einen distalen Abschnitt (8) näher an einem zweiten Ende (9) der Vorrichtung gegenüber dem ersten Ende (4) aufweist, wobei
- das Scherelement (5) eine Länge (L), eine Breite (W) und eine Dicke (T) hat,
- die Länge des Scherelements (5) sich in einem Neigungswinkel (α) zur Längsrichtung (AL) der Vorrichtung erstreckt,
- die Dicke (T) der Abmessung des Scherelements senkrecht zur Längsrichtung (AL) der Vorrichtung entspricht, und
- die Breite (W) der Abmessung des Scherelements senkrecht zur Länge und zur Dicke entspricht, **dadurch gekennzeichnet, dass**
- die durchschnittliche Breite der im distalen Abschnitt (8) angeordneten Scherelemente (5) größer als die durchschnittliche Breite der im proximalen Abschnitt (7) angeordneten Scherelemente (5) ist.

2. Schervorrichtung nach Anspruch 1, wobei
- die Breite der Scherelemente (5) vom ersten Ende (4) zum zweiten Ende (9) hin allmählich zunimmt.

3. Schervorrichtung nach Anspruch 1, wobei
- die Breite der Scherelemente (5) gruppenweise zunimmt, so dass einige benachbarte Scherelemente die gleiche Breite haben.

4. Schervorrichtung nach einem der vorhergehenden Ansprüche, wobei die Scheranordnung (19) aufweist
- eine Vielzahl von Scherelementen (5), die entlang der Längsrichtung (AL) der Vorrichtung voneinander beabstandet sind, um entsprechende Abstände (6) dazwischen zu definieren.

5. Schervorrichtung nach einem der vorhergehenden Ansprüche, wobei
- das Scherelement (5) eine lineare Form hat.

6. Schervorrichtung nach einem der vorhergehenden Ansprüche, wobei
- das Scherelement (5) ein rundlicher oder runder Stab oder eine rundliche oder runde Stange ist.

7. Schervorrichtung nach einem der vorhergehenden Ansprüche, wobei
- die Abstände (6) zwischen den Scherelementen (5) variieren, so dass zwei oder mehr Scherelemente in ungleichmäßigen Abständen voneinander beanstandet sind.

8. Schervorrichtung nach Anspruch 7, wobei
- die Abstände (6) vom ersten Ende (4) zum zweiten Ende (9) hin allmählich zunehmen.

9. Schervorrichtung nach einem der vorhergehenden Ansprüche, aufweisend einen in Längsrichtung (AL) der Schervorrichtung angeordneten Arm (2), wobei
- zumindest einige der im proximalen Abschnitt (7) und im distalen Abschnitt (8) angeordneten Scherelemente (5) sich auf beiden Seiten des Arms (2) erstrecken.

10. Schervorrichtung nach einem der vorhergehenden Ansprüche, aufweisend einen in Längsrichtung (AL) der Schervorrichtung angeordneten Arm (2), wobei
- zumindest einige der im proximalen Abschnitt (7) und im distalen Abschnitt (8) angeordneten Scherelemente (5) sich nur auf einer Seite des Arms (2) erstrecken.

11. Schervorrichtung nach einem der vorhergehenden Ansprüche, wobei
- der proximale Abschnitt (7) der Vorrichtung einen Abschnitt (10) in der Nähe der Befestigungsanordnung (3) beinhaltet, der frei von Scherelementen (5) ist.

12. Schervorrichtung nach einem der vorhergehenden Ansprüche, aufweisend
- ein Hilfselement (21) in zumindest einem der Abstände (6), wobei
- die Länge des Hilfselements 21 nicht mehr als 50 %, vorzugsweise nicht mehr als 10 % der Länge eines benachbarten Scherelements beträgt.

13. Anordnung (100) zum Trennen von Feststoffen und Flüssigkeiten, aufweisend:
- einen Behälter (12) zum Aufnehmen eines Aufgabematerials, und
- zumindest eine Schervorrichtung (1) nach einem der vorhergehenden Ansprüche, die über die Befestigungsanordnung (3) mit einer Antriebseinheit verbunden ist, um sich dadurch um eine Rotationsachse (X) zu drehen.

14. Anordnung nach Anspruch 13, aufweisend
- eine Harkenanordnung (12) aufweisend zumindest einen Harkenarm (13) mit Abstreifklingen (14), die sich nach unten zum Boden (15) des Behälters erstrecken, um festgesetzte und verdichtete Pulpe zu einem Unterlaufauslass (16) zu schieben.

15. Verwendung der Schervorrichtung nach einem der Ansprüche 1 bis 12 oder der Anordnung nach einem der Ansprüche 14 bis 15 zum Trennen von Feststoffen aus Suspensionen in der Bergbau- und in der mineralverarbeitenden Industrie.

## Revendications

1. Dispositif de cisaillement (1) pouvant être raccordé à un ensemble d'entraînement d'un agencement de séparation de solides d'un liquide, le dispositif de cisaillement (1) comprenant
- un agencement de fixation (3) agencé dans une première extrémité (4) du dispositif pour relier le dispositif de cisaillement (1) à l'ensemble d'entraînement,
- un agencement de cisaillement (19) étant agencé pour définir des éléments de cisaillement (5) inclinés par rapport à la direction longitudinale (AL) du dispositif et des intervalles (6) entre eux, dans lequel
- le dispositif (1) a une partie proximale (7) plus proche de la première extrémité (4) et une partie distale (8) plus proche d'une seconde extrémité (9) du dispositif opposée à la première extrémité (4), dans lequel -l'élément de cisaillement (5) a une longueur (L), une largeur (W) et une épaisseur (T),
- la longueur de l'élément de cisaillement (5) s'étend selon un angle d'inclinaison (α) par rapport à la direction longitudinale (AL) du dispositif,
- l'épaisseur (T) est la dimension de l'élément de cisaillement perpendiculaire à la direction longitudinale (AL) du dispositif, et
- la largeur (W) est la dimension de l'élément de cisaillement perpendiculaire à la longueur et à l'épaisseur, **caractérisée en ce que**
- la largeur moyenne des éléments de cisaillement (5) agencés dans la partie distale (8) est supérieure à la largeur moyenne des éléments de cisaillement (5) agencés dans la partie proximale (7).

2. Dispositif de cisaillement selon la revendication 1, dans lequel
- les éléments de cisaillement (5) augmentent progressivement en largeur de la première extrémité (4) vers la seconde extrémité (9).

3. Dispositif de cisaillement selon la revendication 1, dans lequel
- les éléments de cisaillement (5) augmentent leur largeur par groupes de sorte que certains éléments de cisaillement adjacents aient une même largeur.

4. Dispositif de cisaillement selon l'une quelconque des revendications précédentes, dans lequel l'agencement de cisaillement (19) comprend
- une pluralité d'éléments de cisaillement (5) étant espacés le long de la direction longitudinale (AL) du dispositif pour définir des intervalles (6) respectifs entre eux.

5. Dispositif de cisaillement selon l'une quelconque des revendications précédentes, dans lequel
- l'élément de cisaillement (5) a une forme linéaire.

6. Dispositif de cisaillement selon l'une quelconque des revendications précédentes, dans lequel
- l'élément de cisaillement (5) est un piquet ou une tige de forme ronde ou arrondie.

7. Dispositif de cisaillement selon l'une quelconque des revendications précédentes, dans lequel
- les intervalles (6) entre les éléments de cisaillement (5) varient de sorte que deux éléments de cisaillement ou plus soient espacés à des intervalles irréguliers les uns par rapport aux autres.

8. Dispositif de cisaillement selon la revendication 7, dans lequel
- les intervalles (6) augmentent progressivement de la première extrémité (4) à la seconde extrémité (9).

9. Dispositif de cisaillement selon l'une quelconque des revendications précédentes, comprenant un bras (2) agencé dans la direction longitudinale (AL) du dispositif de cisaillement, et dans lequel
- au moins certains des éléments de cisaillement (5) agencés dans la partie proximale (7) et la partie distale (8) s'étendent des deux côtés du bras (2).

10. Dispositif de cisaillement selon l'une quelconque des revendications précédentes, comprenant un bras (2) agencé dans la direction longitudinale (AL) du dispositif de cisaillement, et dans lequel
- au moins certains des éléments de cisaillement (5) agencés dans la partie proximale (7) et la partie distale (8) s'étendent uniquement d'un côté du bras (2).

11. Dispositif de cisaillement selon l'une quelconque des revendications précédentes, dans lequel
- la partie proximale (7) du dispositif comporte une partie (10) à proximité de l'agencement de fixation (3) étant dépourvue des éléments de cisaillement (5).

12. Dispositif de cisaillement selon l'une quelconque des revendications précédentes, comprenant
- un élément auxiliaire (21) dans au moins un des intervalles (6), dans lequel
- la longueur de l'élément auxiliaire (21) ne dépasse pas 50 %, de préférence 10 %, de la longueur d'un élément de cisaillement adjacent.

13. Agencement de séparation solide-liquide, l'agencement (100) comprenant :
- un réservoir (12) destiné à recevoir une matière première, et
- au moins un dispositif de cisaillement (1) selon l'une quelconque des revendications précédentes, relié par l'agencement de fixation (3) à un ensemble d'entraînement pour tourner autour d'un axe de rotation (X).

14. Agencement selon la revendication 13, comprenant
- un ensemble râteau (12) comprenant au moins un bras de râteau (13) ayant des lames de raclage (14) s'étendant vers le bas en direction du fond (15) du réservoir pour déplacer la pulpe décantée et compactée vers une sortie de sous-écoulement (16).

15. Utilisation du dispositif de cisaillement selon l'une quelconque des revendications 1 à 12 ou de l'agencement selon l'une quelconque des revendications 14 et 15 pour séparer les solides de suspensions dans les industries de la mine et du traitement des minerais.
